# DEMANDE DE BREVET EUROPEEN

(11) **EP 4 016 199 A1**
(43) Date de publication de la demande: **22.06.2022**
(21) Numéro de dépôt: 20214483.8
(22) Date de dépôt: 16.12.2020
(51) Int. Cl.: G04D 3/00, B23B 11/00, G04D 3/02

(54) **DISPOSITIF ET PROCEDE DE TEST D'UNE PROPRIETE MECANIQUE D'UN ARBRE HORLOGER**

(71) Demandeur: ROLEX SA, 1211 Genève 26 (CH)
(72) Inventeur: DEBAUD, Samuel, 01130 Plagne (FR); SALLIN, Daniel, 74350 Villy-le-Bouveret (FR); SEMOROZ, Alain, 1006 Lausanne (CH)
(74) Mandataire: Moinas & Savoye SARL

(57) **Abrégé**

Dispositif de test (3) d'un arbre horloger (1) comprenant au moins un premier pivot (10, 10') et un axe (A1) de rotation, le dispositif comprenant :
- un posage (2) comprenant deux supports (12, 12') destinés à recevoir l'arbre horloger (1), dont au moins l'un des deux supports (12) est destiné à recevoir l'au moins un premier pivot (10),
- un élément (4 ; 4') d'application d'un effort mécanique sur l'arbre horloger, positionné de sorte que cet effort soit au moins partiellement repris par le support (12) au niveau de l'au moins un premier pivot (10),
caractérisé en ce que l'élément (4 ; 4') d'application d'un effort mécanique est agencé de sorte que l'arbre horloger (1) est entraîné en rotation par un mouvement relatif de l'élément (4 ; 4') d'application d'un effort mécanique et du posage (2).

## Description

L'invention concerne un dispositif de test d'une propriété mécanique d'un arbre horloger. L'invention concerne aussi un procédé de test d'une propriété mécanique d'un arbre horloger. L'invention concerne encore un procédé de fabrication et/ou de contrôle d'un arbre horloger ou d'un mouvement horloger ou d'une pièce d'horlogerie.

Il existe un intérêt à caractériser spécifiquement la résistance à la flexion et la limite de rupture du pivot d'un arbre horloger tant pour discriminer les solutions proposées que pour vérifier, sur des pièces de production, qu'une résistance minimale est garantie.

Une méthode connue de l'art antérieur permettant de caractériser la résistance à la flexion d'un arbre de balancier consiste à bloquer ledit arbre par une pince afin que son pivot puisse être chargé radialement, avec des forces statiques, par le biais d'un couteau. La position longitudinale du couteau est réglée en tenant compte de la géométrie de l'arbre horloger. Le point de contact correspond approximativement à celui d'une pierre percée avec l'arbre dans une configuration montée de l'arbre, en particulier du pivot, dans la pierre. L'angle de déformation généré sur la génératrice du pivot par la charge radiale est mesuré optiquement, par exemple avec un goniomètre. Le couteau est connecté à un capteur de force pour mesurer la charge appliquée sur le pivot.

Un appareil permettant d'appliquer une telle méthode permet par exemple de mesurer l'angle de rupture, la charge de rupture et la limite de déformation élastique (angle de déformation résiduelle). (Mesures de la fragilité des pivots d'axes de balancier ; 46e congrès de la SSC, communication n°4, 9-10 octobre 1971).

Une telle méthode est adaptée à la qualification d'arbres horlogers métalliques mais est destructive. Elle ne permet donc pas de caractériser et/ou tester un arbre dans un flux de production comprenant un contrôle systématique d'une proportion significative des pièces produites, voire de toutes les pièces. Elle ne permet pas non plus de tester les composants sur l'entier de leur circonférence. Elle ne permet ainsi pas de tester de manière fiable et répétable des composants faits dans des matériaux présentant des modes de défaillance ne pouvant être révélés en raison du caractère ponctuel de la force appliquée.

Des méthodes de test en flexion ont été développées spécifiquement pour les céramiques, par exemple, les tests trois points ou quatre points. Des éprouvettes monolithiques, en général de forme rectangulaire, sont posées sur un support avec deux points de contact, et une ou deux charges sont appliquées sur l'éprouvette à des distances prédéterminées des deux points de contact du support.

Toutefois, ces méthodes sont indiquées pour tester un matériau et non pas une pièce, pour laquelle la géométrie revêt un caractère particulier et dont les propriétés sont souvent fonction de l'historique de fabrication.

De plus, les tests sont effectués en mode localisé et ne sont donc pas représentatifs des contraintes qu'un arbre horloger est amené à subir sur sa circonférence.

Le but de l'invention est de fournir un dispositif de test permettant d'améliorer les dispositifs connus de l'art antérieur. En particulier, l'invention propose un dispositif de test qui permet de caractériser et/ou de tester de manière fiable tout composant horloger de géométrie de révolution, tel que par exemple un axe ou un arbre horloger, plus particulièrement un arbre de balancier ou un arbre d'un mobile d'échappement, une goupille, une tige, un tube, une vis, ou encore une barrette.

Un dispositif de test selon l'invention est défini par la revendication 1.

Différents modes de réalisation du dispositif sont définis par les revendications 2 à 10.

Un procédé de test selon l'invention est défini par la revendication 11.

Différents modes d'exécution du procédé sont définis par les revendications 12 à 14.

Un procédé de fabrication et/ou de contrôle selon l'invention est défini par la revendication 15.

Les dessins annexés représentent, à titre d'exemple, un mode de réalisation d'un dispositif de test.
La figure 1 est une vue schématique d'un mode de réalisation d'un dispositif de test recevant un arbre horloger.
La figure 2 est une vue en perspective partielle du mode de réalisation du dispositif de test recevant un arbre horloger.
La figure 3 est une vue en coupe partielle du mode de réalisation du dispositif de test recevant un arbre horloger.
Les figures 4A et 4B sont des vues schématisées des éléments de support du dispositif de test recevant un arbre horloger.
La figure 5 est une vue en coupe partielle du mode de réalisation du dispositif de test recevant un arbre horloger.
Les figures 6 et 7 sont des vues en perspective du mode de réalisation du dispositif de test.
La figure 8 est une vue schématique de la position de l'axe de l'arbre horloger en début et en cours de test.

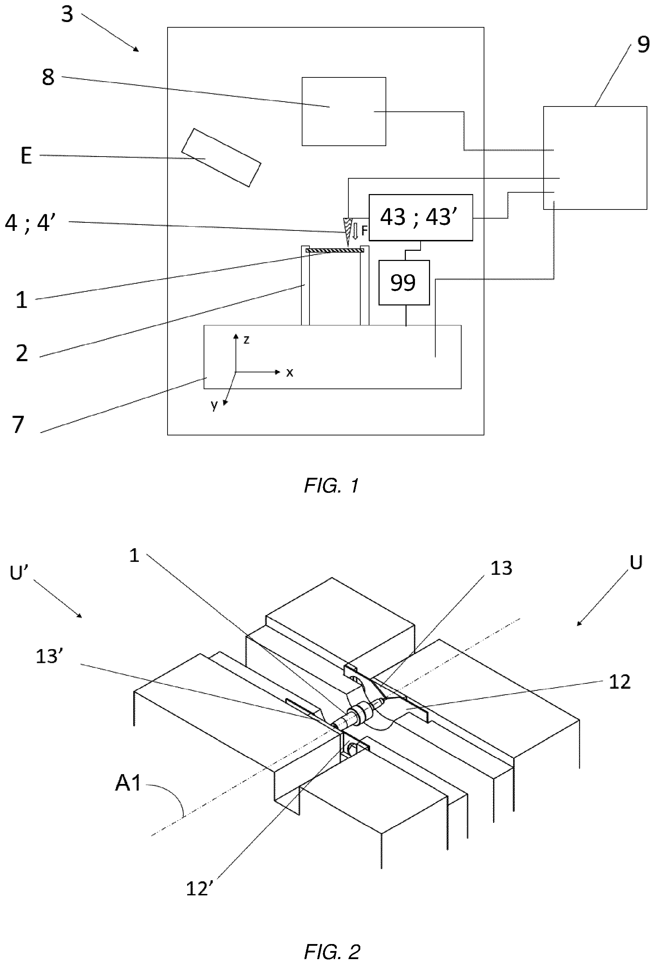

Un mode de réalisation d'un dispositif de test 3 est décrit ci-après en référence aux figures 1 à 8. Le dispositif permet de caractériser et/ou de tester une propriété mécanique d'un arbre horloger, notamment la résistance mécanique d'un pivot, en particulier la résistance à la flexion d'un pivot ou une limite élastique d'un pivot.

Le dispositif de test 3 ou appareil ou équipement permet notamment de tester dynamiquement la résistance d'un arbre horloger, en particulier d'un arbre de balancier ou d'un arbre d'un mobile d'échappement. Le dispositif de test 3 est plus particulièrement adapté pour les arbres horlogers en matériau de type ductile ou en matériau de type fragile. Le dispositif de test 3 comprend un support permettant de simuler le guidage de l'arbre horloger dans un mouvement horloger pour que le test dynamique reproduise le plus fidèlement possible les contraintes potentiellement subies par l'arbre horloger, par exemple pour identifier des arbres horlogers défectueux ou valider une géométrie d'arbre particulière.

Un mouvement horloger comprend différents types d'arbres, comme par exemple un arbre de balancier ou un arbre d'un mobile d'échappement, qui sont soumis à des contraintes mécaniques lorsqu'ils sont en fonctionnement dans le mouvement, notamment lors de chocs. Le dispositif de test 3 permet d'effectuer des tests de flexion et/ou de résilience de ces différents arbres horlogers.

Un arbre horloger, en particulier un arbre de balancier, comprend, à chaque extrémité, un tigeron se prolongeant par un pivot. Lors d'une accélération, notamment dues à un ou plusieurs chocs, les pivots subissent chacun des actions de la part du palier avec lesquels ils coopèrent respectivement. Suivant l'orientation de cette accélération, le pivot va subir une action de la part de la pierre de contre-pivot (sollicitation axiale en compression) et/ou de la pierre percée (sollicitation radiale en flexion et/ou en cisaillement), ces pierres étant intégrées au sein dudit palier. Les propriétés mécaniques du pivot doivent donc être suffisantes pour résister à la compression à l'encontre de la pierre contre-pivot et à la flexion et/ou au cisaillement à l'encontre de la pierre percée, sans présenter de déformation plastique, fissuration ou rupture. La résistance du pivot est influencée par la structure de la matière et la géométrie de l'arbre horloger, en particulier ses dimensions, sa forme et son état de surface. Plus particulièrement, pour des arbres horlogers faits en un matériau fragile, les concentrations de contraintes localisées peuvent avoir des conséquences dramatiques si elles se situent à l'emplacement de défauts intrinsèques du matériau, tels que des fissures, qui pourraient ainsi se propager très rapidement et mener à la rupture prématurée de l'arbre horloger.

Le dispositif de test 3 d'arbres horlogers permet de solliciter un arbre horloger sur toute sa circonférence en mettant l'arbre horloger en rotation autour de son axe géométrique lors du test.

L'arbre horloger 1 à caractériser et/ou à tester comprend au moins un premier pivot 10, 10' et un axe A1 de rotation. Par exemple, l'arbre horloger 1 comprend un premier pivot 10, un deuxième pivot 10' et un axe A1 de rotation. De préférence, l'arbre horloger est un arbre de balancier ou un arbre de mobile d'échappement. L'axe A1 de rotation est de préférence un axe d'une géométrie de révolution de l'arbre.

Le dispositif de test 3 comprend :
- un posage 2 comprenant deux supports 12, 12' destinés à recevoir l'arbre horloger 1 au niveau de ses deux extrémités, dont au moins l'un des deux supports 12, 12' est destiné à recevoir l'au moins un premier pivot 10 ;
- un élément 4 ; 4' d'application d'un effort mécanique sur l'arbre horloger au moins sensiblement perpendiculairement à l'axe A1 de rotation de sorte que cet effort soit au moins partiellement repris par le support 12 au niveau de l'au moins un pivot 10 ;
- un moyen de déplacement 7, 43 ; 43' de l'un ou l'autre du posage 2 et de l'élément 4 ; 4' d'application de l'effort mécanique permettant de les déplacer relativement l'un à l'autre dans un plan perpendiculaire à l'effort appliqué, selon une direction perpendiculaire à l'axe A1.

Par ailleurs, l'élément 4 ; 4' d'application d'un effort mécanique peut être également un élément 4 ; 4' d'entraînement en rotation de l'arbre horloger 1 autour de l'axe A1 de rotation, relativement au posage 2.

Autrement dit, le dispositif de test comprend un posage 2 comprenant deux supports 12, 12', et un élément 4 ; 4' d'application d'un effort mécanique sur l'arbre horloger 1, qui permettent de contraindre mécaniquement l'arbre horloger 1 tout en l'entraînant en rotation par le déplacement relatif du posage 2 par rapport à l'élément 4 ; 4'. De préférence, l'un ou l'autre seulement du posage 2 et de l'élément 4 ; 4' d'application d'un effort mécanique sur l'arbre horloger 1 est mobile par rapport à un repère géocentrique. En variante, le posage 2 et l'élément 4 ; 4' d'application d'un effort mécanique sur l'arbre horloger 1 sont mobiles par rapport à un repère géocentrique.

Avantageusement, le dispositif de test 3 comprend encore :
- des moyens de contrôle de l'effort appliqué sur l'arbre horloger 1, par exemple un ou plusieurs capteurs de force intégrés aux supports 12, 12' et/ou à l'élément 4 ; 4' d'application de l'effort mécanique sur l'arbre horloger 1,
- des moyens de commande du déplacement et de la position relative de l'élément 4 ; 4' d'application de l'effort mécanique sur l'arbre horloger 1 par rapport à l'arbre horloger 1 et/ou aux supports 12, 12', par exemple une ou plusieurs motorisations ou actionneurs 7, 43 ; 43',
- des moyens de contrôle de la position absolue ou relative de l'élément 4 ; 4' d'application de l'effort mécanique sur l'arbre horloger 1 par rapport à l'arbre horloger 1 et/ou aux supports 12,12', par exemple un ou plusieurs capteurs de position (non représentés) et/ou des moyens de visualisation 8,
- optionnellement, un éclairage E, et
- une unité de gestion et d'enregistrement 9.
Les moyens de commande des positions/déplacements et les moyens de contrôle des positions permettent de réaliser un asservissement en position/déplacement.

Comme cela sera décrit plus en détail dans un mode de réalisation, l'arbre horloger 1 est déplacé en rotation autour de son axe A1 par roulement, de préférence par roulement sans glissement, sous l'effet de l'élément 4 ; 4' d'application de l'effort mécanique. Il se produit un mouvement relatif de roulement de l'arbre horloger 1 sur l'élément 4 ; 4' d'application de l'effort mécanique. Ceci provoque un pivotement de l'arbre horloger 1 relativement aux supports 12, 12' sous l'effet de l'élément 4; 4' d'application de l'effort mécanique. Dans ce mouvement, l'arbre horloger 1 pivote sur les supports 12, 12'.

Les supports 12, 12' font partie d'un posage 2 conçu de manière à s'adapter à la géométrie spécifique de l'arbre horloger 1, afin de supporter l'arbre horloger 1, de préférence horizontalement, et de préférence en simulant les moyens de pivotement, à savoir les paliers, avec lesquels l'arbre horloger est prévu pour coopérer. Autrement dit, dans ce mode de réalisation, on essaie de reproduire sur ce support, aussi fidèlement que possible, les conditions de pivotement dans lesquelles se trouverait l'arbre horloger monté dans un mouvement horloger.

La disposition relative des supports 12, 12' et de l'élément d'application de l'effort sont déterminés par la géométrie de l'arbre horloger 1 ; une fois leurs positions initiales définies et réglées, le dispositif de test 3 permet de tester de nombreux arbres de même géométrie successivement.

Les supports 12, 12' peuvent être identiques ou différents. De préférence, si les pivots 10, 10' de l'arbre horloger sont identiques, les supports 12, 12' sont également identiques.

Une fois l'arbre horloger mis en place sur le posage 2, l'axe A1 de l'arbre horloger est de préférence parallèle à un axe *x*, notamment un axe *x* horizontal. Les axes *y* et *z* sont perpendiculaires à l'axe *x* et perpendiculaires entre eux. Enfin, l'axe *z* est de préférence vertical. Les axes *x*, *y* et *z* forment de préférence un repère orthogonal.

Dans l'exemple de réalisation illustré, le posage 2 est conçu pour supporter un arbre de balancier 1 en position horizontale, au niveau de ses deux pivots 10, 10'. L'arbre horloger 1 peut pivoter librement selon un axe horizontal *x* défini par le support, correspondant à l'axe A1 de l'arbre, une fois placé sur le posage.

Par souci de simplification, la géométrie des supports 12, 12' étant ici la même, seul le support 12 sera décrit.

Le support 12 comprend une encoche 122 dimensionnée pour recevoir un pivot 10 de l'arbre horloger 1.

Avantageusement, l'encoche 122 a des dimensions et une forme correspondant à une moitié du palier prévu pour collaborer avec l'arbre horloger 1 afin de le guider horizontalement en rotation. En effet, l'encoche 122 comporte une zone de contact adaptée pour entrer en contact avec le pivot de l'arbre horloger 1. La zone de contact peut être par exemple cylindrique ou olivée, de manière à être aussi semblable que possible à la zone de contact du palier du mouvement destiné à recevoir l'arbre horloger 1. Le support 12 peut à cet effet comprendre une pierre de pivot (pierre percée) ou une demi-pierre de pivot, pour recevoir un pivot. Alternativement, le support peut simplement présenter, usinée dans la matière du support 12, une conformation sensiblement identique à celle d'une demi-pierre ou sensiblement identique à celle d'une pierre.

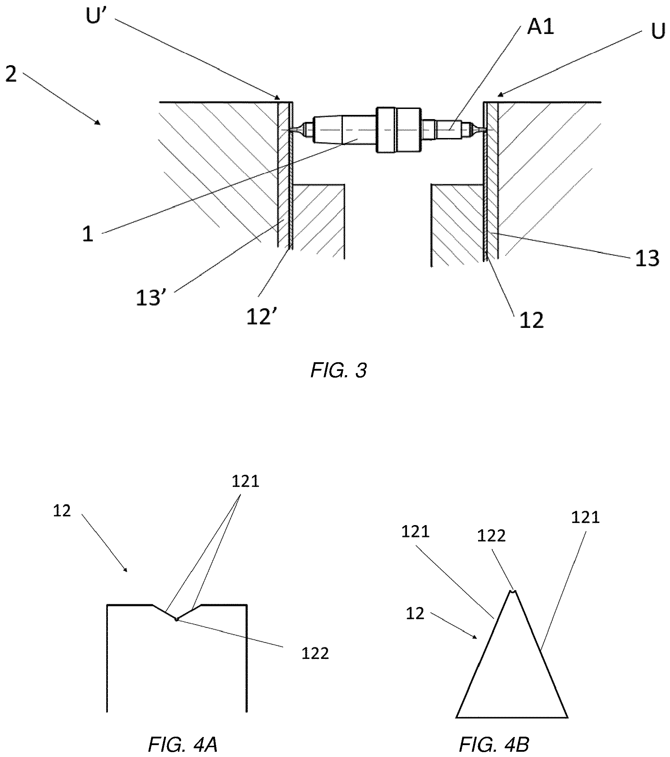

Avantageusement, comme représenté sur la figure 4A, le support 12 comprend deux surfaces de guidage 121 en V rejoignant l'encoche 122. Les deux surfaces de guidage forment un angle compris entre 10° et 180°, par exemple de 90°, pour faciliter la mise en place de l'arbre horloger 1. En alternative, le support 12 ne comporte pas de surface de guidage mais présente un angle, en dessous de l'encoche 122, supérieur à 180°, comme illustré sur la figure 4B, pour permettre, par exemple, la mise en place automatisée de l'arbre horloger 1 sur l'encoche 122. Bien entendu, le support 12 peut présenter toute géométrie dans laquelle il est possible de venir conformer une encoche 122.

Dans une variante, lorsque les deux supports 12, 12' sont différents, un des deux supports 12, 12' comporte un trou dans lequel on vient insérer un des deux pivots, le trou ayant avantageusement le même diamètre que le trou de la pierre percée qu'il simule. L'autre partie de support comporte une encoche 122 telle que décrite plus haut.

Dans une autre variante, les deux supports 12, 12' comportent chacun un trou ayant le même diamètre que les trous de pierres percées qu'ils simulent. Dans une telle variante de réalisation, au moins un des supports 12, 12' est mobile selon l'axe *x* de manière à permettre la mise en place de l'arbre. La mise en place de l'arbre horloger 1 se fait en plusieurs étapes : insertion du premier pivot 10 dans le trou du premier support 12, maintien temporaire de l'arbre horloger 1 en position horizontale et rapprochement en translation selon l'axe *x* du deuxième support 12' afin de faire coïncider le trou du deuxième support 12' et le deuxième pivot 10', ajustement de la position relative des supports 12, 12' pour optimiser le maintien de l'arbre horloger 1 (éviter l'ébat, appliquer une force prédéterminée le long de l'axe de l'arbre, ...).

Par ailleurs, les supports 12, 12' peuvent comporter plusieurs encoches 122 et/ou plusieurs trous de manière à tester successivement plusieurs arbres horlogers de même géométrie ou de géométries différentes.

La section du support 12 dans la direction de l'axe x est définie de manière à déterminer la zone ou le point d'appui du pivot 10. Par exemple, les encoches 122 comprennent des surfaces cylindriques de révolution afin de faciliter la fabrication du support 12. Préférentiellement, la longueur de la zone d'appui est supérieure à 10% de la longueur du pivot dans la direction de l'axe x. Idéalement, la longueur de la zone d'appui est comprise entre 10 et 90 % de la longueur du pivot, voire entre 15 et 80 %, voire entre 20 et 60 %, dans la direction de l'axe x. En alternative, les encoches 122 comprennent des surfaces de révolution à rayon évolutif (ou non cylindrique) de manière à contrôler la zone d'appui du pivot 10 sur le support 12. De préférence, la zone d'appui du pivot consiste en un point d'appui, correspondant au plus petit diamètre de la pierre olivée ou de la demi-pierre olivée dans laquelle le pivot 10 est amené à pivoter.

En complément aux supports 12, 12', le posage 2 comprend de préférence des butées 13, 13' servant à limiter l'ébat axial de l'arbre horloger 1. Ces butées 13, 13' permettent ainsi de maîtriser très précisément les zones ou les points d'appui des pivots 10, 10' sur les supports 12, 12'. En conséquence, le dispositif de test comprend de préférence au moins une butée 13, 13' axiale destinée à limiter le déplacement de l'arbre horloger 1 selon l'axe x.

La géométrie de la surface des butées amenées à entrer en contact avec le pivot est choisie pour être de préférence similaire à celle de la pierre de contre-pivot qu'elle simule. Elle peut être concave, convexe ou plane. En complément, l'une et/ou l'autre des butées est élastique ou rappelée élastiquement pour faciliter la mise en œuvre du test.

Les butées 13, 13' peuvent se présenter sous la forme d'une plaque d'une épaisseur suffisante pour assurer leur fonction. Cette épaisseur peut être de l'ordre du micromètre, du millimètre, voir du centimètre. Par exemple, les butées ont une épaisseur de 200 µm. En alternative, les butées 13, 13' peuvent être intégrées aux supports 12, 12' et mises en œuvre par le biais d'un usinage plus complexe de l'encoche 122 et de la zone attenante.

Les matériaux du support 12 et de la butée 13 sont sélectionnés pour simuler au mieux le palier de mouvement d'horlogerie dans lequel l'arbre horloger 1 est destiné à être guidé. Ces matériaux doivent de préférence présenter des caractéristiques tribologiques permettant d'éviter leur usure, tout en évitant de porter atteinte à l'intégrité de la surface de l'arbre horloger 1 à caractériser et/ou à tester, notamment dans le cas d'un test d'épreuve. Le support 12 et/ou la butée 13 peuvent être faits dans le même matériau que le palier de mouvement d'horlogerie dans lequel l'arbre horloger 1 est destiné à être guidé, par exemple en rubis, en céramique, en alliage métallique dur, en alliage cuivreux, en métaux précieux, ou dans tout autre matériau adapté, par exemple en nickel ou en alliage de nickel (Ni), notamment en alliage nickel-phosphore (NiP).

Le support 12 et la butée 13 peuvent être faits dans un même matériau ou dans des matériaux différents.

Le support 12 est, par exemple, en nickel (Ni) et fabriqué par technologie LiGA. Le support 12 peut ainsi en variante intégrer une pierre ou une demi-pierre en rubis, qui peut être insérée lors de la fabrication par LiGA.

La butée 13 est, par exemple, en nickel (Ni) et produite par LiGA. La butée 13 peut ainsi en variante intégrer une pierre en rubis, qui peut être insérée lors de la fabrication par LiGA.

La surface du support 12 et/ou de la butée 13 amenée à être en contact avec l'arbre horloger 1 à caractériser et/ou à tester peut optionnellement être pourvue d'un revêtement ou d'un traitement de surface approprié. Le revêtement ou le traitement de surface peut être, par exemple, appliqué uniquement sur la surface du support 12 et/ou de la butée 13 amenées à être en contact avec le pivot de l'arbre horloger 1. D'autres surfaces du support ou de la butée peuvent également comporter un tel revêtement ou traitement de surface.

Le support 12 et la butée 13 sont prévus pour pouvoir être facilement remplacés, que ce soit pour adapter le posage 2 aux dimensions ou au type d'arbre horloger 1, ou pour pallier l'usure du support 12 et/ou de la butée 13 par le remplacement de ces éléments.

Les supports 12, 12' et les butées 13, 13' sont assemblés sur des unités U, U' permettant leur positionnement sur le posage 2. Ces unités intègrent des capteurs de force permettant de mesurer la force reprise par les supports 12, 12' au moment du test.

De préférence, chaque unité U et U' est mobile de manière indépendante dans le plan *x-y,* afin de permettre le positionnement de l'arbre horloger sur le support, y compris le réglage de l'ébat au niveau des butées 13, 13', ainsi que le positionnement de l'arbre horloger 1 relativement à l'élément 4 ; 4' d'application d'un effort mécanique sur l'arbre horloger. Alternativement, les unités U et U' sont solidaires. De préférence, les unités U et U' peuvent être déplacées de concert dans le plan *x-y* pour positionner l'arbre horloger 1 relativement à l'élément 4 ;4' d'application d'un effort mécanique sur l'arbre horloger, notamment lors du test.

Optionnellement, un réglage individuel des unités U et U' selon l'axe *z* est prévu, pour pouvoir ajuster si nécessaire l'horizontalité de l'arbre horloger pour la mise en place du test ou lors du test.

Optionnellement, les unités U et U' peuvent être déplacées de concert selon l'axe *z* pour appliquer une force F sur les points d'appui de l'arbre horloger sur les supports 12,12' et sur l'élément 4 d'application d'un effort mécanique sur l'arbre horloger, notamment lors du test. Les déplacements peuvent être motorisés ou non.

L'élément 4 ; 4' d'application d'un effort mécanique sur l'arbre horloger comprend une structure rigide agencée pour venir en appui contre l'arbre horloger 1, notamment contre une surface 42 de l'arbre horloger 1, notamment une surface 42 de révolution d'axe A1. La surface 42 de l'arbre horloger est cylindrique ou tronconique. De préférence, l'élément 4 ; 4' d'application d'un effort mécanique sur l'arbre horloger 1 est agencé pour exercer une force perpendiculairement ou sensiblement perpendiculairement à l'axe A1. De préférence, cette force est une force verticale ou sensiblement verticale, dirigée selon l'axe *z*.

L'élément 4 ; 4' d'application d'un effort mécanique sur l'arbre horloger est ainsi conçu pour appliquer une force sur l'arbre horloger posé en appui sur les supports 12, 12'. Par la suite et en référence au mode de réalisation illustré, on peut désigner plus particulièrement l'élément 4 d'application d'un effort mécanique sur l'arbre horloger par « couteau ».

L'extrémité 41 du couteau 4 en contact avec l'arbre horloger est dimensionnée de manière à ce que son épaisseur, dans la direction de l'axe *x* de rotation de l'arbre, permette de garantir une transmission précise de la force appliquée au niveau de la surface 42 de l'arbre horloger 1 de manière à ce que cet effort puisse être repris par les pivots 10, 10' de l'arbre horloger 1 au niveau des supports 12, 12'.

Par ailleurs, l'extrémité 41 du couteau 4 en contact avec l'axe horloger est dimensionnée de manière à ce que sa longueur permette une mise en rotation de l'arbre horloger par le biais du déplacement relatif du couteau 4 et du posage 2.

La longueur de l'extrémité 41 du couteau 4, dans la direction *y* perpendiculaire à l'axe A1 de rotation de l'arbre, est au minimum égale à la circonférence de la surface 42. Avantageusement, la longueur vaut 1,5 fois la circonférence de la surface 42 de l'arbre, afin de pouvoir s'appuyer, mettre en charge et générer un minimum d'un tour en rotation de l'arbre, ou à un multiple de la circonférence de la surface 42 plus 0.5 fois ladite circonférence, pour permettre d'effectuer plusieurs tours de mesure. La longueur de l'extrémité 41 est par exemple comprise entre 0.5 mm et 150 mm. Ainsi, le couteau 4 présente une longueur telle qu'elle permet de provoquer une rotation d'au moins un tour de l'arbre horloger 1 lorsqu'il se déplace sans glisser sur l'arbre horloger 1 le long d'une course complète du couteau 4.

Le couteau 4 doit être suffisamment rigide pour ne pas être significativement déformé et conserver son intégrité géométrique durant tout le test.

Le couteau 4 est ainsi réalisé dans un matériau adapté afin de transmettre au mieux les forces à l'arbre horloger 1. L'extrémité 41 est conçue pour ne pas abîmer la surface 42 de l'arbre horloger et pour mettre l'arbre horloger 1 en rotation (du fait du frottement à l'interface entre l'extrémité 41 et l'arbre horloger) lorsque le couteau est mis en mouvement relativement à l'arbre de balancier, ou lorsque le posage 2 est mis en mouvement relativement au couteau, dans une translation selon la direction y, perpendiculaire à l'axe A1 de l'arbre horloger à caractériser et/ou à tester.

De préférence, l'extrémité 41 est fabriquée en polymère, renforcé ou non, ou en composite, par exemple en caoutchouc, en élastomère, en polypropylène, en polycarbonate, en polyméthacrylate de méthyle, en résine photo polymérisable, en nylon, etc. Ceci permet de ne pas endommager la surface 42 de l'arbre horloger 1 durant la mesure et de garantir une rotation de l'arbre horloger 1 par le biais du déplacement du couteau en surface de l'arbre. Une certaine souplesse de l'extrémité 41 permet également d'optimiser la surface effective de contact entre le couteau et l'arbre horloger à caractériser et/ou à tester, et d'éviter un pic de valeur de pression de contact.

Le matériau du couteau est de préférence choisi de sorte que le coefficient de friction entre l'arbre horloger et le couteau est supérieur ou égal à 0.3.

Le couteau peut être monobloc ou en plusieurs parties. Il peut par exemple comporter une âme rigide, et être pourvu d'un revêtement ou d'un traitement de surface plus souple, sur au moins une partie de sa surface, en particulier sur son extrémité 41 adaptée pour entrer en contact avec l'arbre horloger à caractériser et/ou à tester.

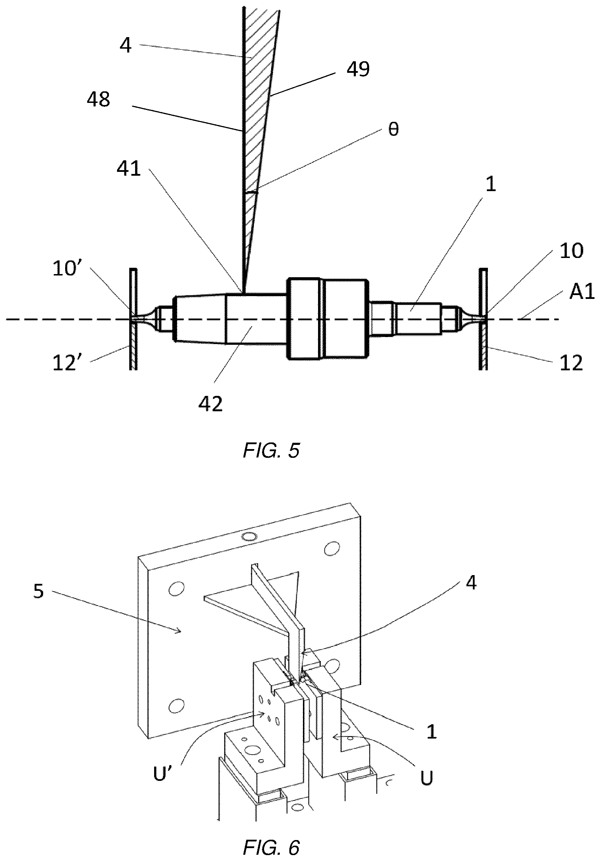

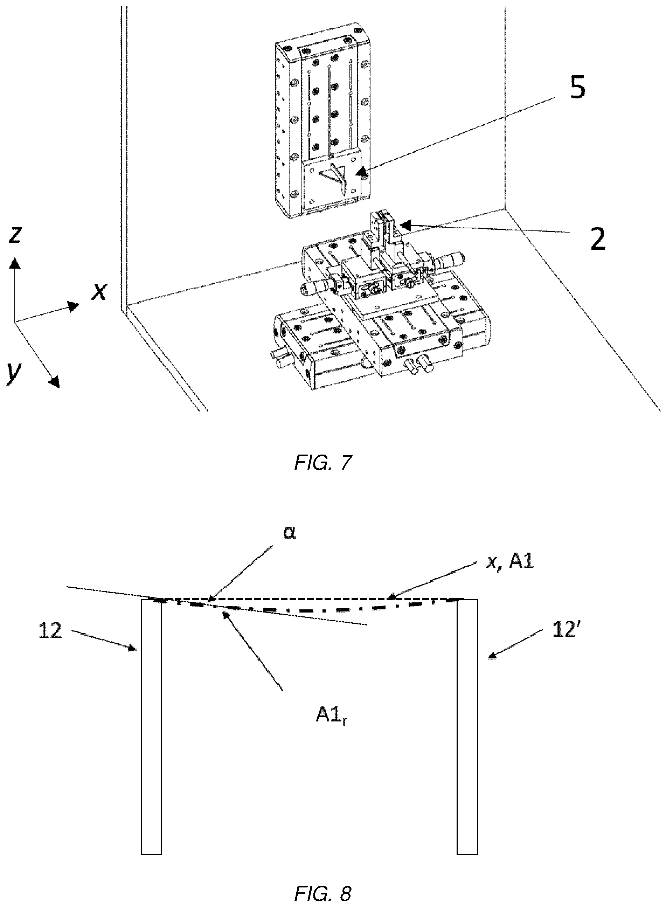

Comme représenté sur les figures 6 et 7, le couteau 4 peut être fixé sur une structure de support 5 adaptée pour optimiser le transfert de la force appliquée.

En variante, l'élément d'application d'un effort mécanique peut comprendre une roulette 4' mobile en rotation selon un axe parallèle à l'axe A1. Dans cette variante, le déplacement du posage 2 et/ou de la structure de support 5 permet de positionner relativement la roulette en contact avec la surface 42 de l'arbre horloger 1.

Lors du déroulement de l'essai, la force est appliquée par un déplacement du posage 2 ou de la structure de support 5 selon l'axe *z*. La rotation motorisée (à l'aide d'un actionneur 43') de la roulette, dont les propriétés (géométrie de la périphérie 41', matériau) sont similaires à celles du couteau 4, permet l'entraînement de l'arbre horloger 1. La roulette 4' se déplace ainsi par rapport au posage 2. En alternative, le posage 2 peut intégrer des supports 12 ; 12' rotatifs.

Un exemple de réalisation d'un couteau 4 est illustré sur la figure 5. La section du couteau, selon une coupe dans le plan *x-z*, a la forme d'un triangle rectangle dont le premier côté 48 est parallèle à l'axe *z* (et perpendiculaire à l'axe A1 de rotation de l'arbre) et le deuxième côté 49 forme un angle θ avec le premier côté 48. La section du couteau présente ainsi un angle θ au niveau de l'extrémité 41 destinée à venir en contact avec l'arbre horloger 1. L'angle θ est compris entre 1° et 30°. Il est par exemple de 10°.

Cette géométrie est avantageuse pour permettre de positionner le couteau au plus proche du pivot 10, sans interférer avec le support 12 et/ou d'éventuels changements de diamètre de l'arbre horloger 1. Le couteau 4 vient en appui sur une surface 42 de l'arbre horloger 1 à une distance prédéterminée du point ou de la zone de contact du pivot 10 sur le support 12, de manière à ce que la répartition de la force appliquée par le couteau 4 sur les deux supports 12, 12' puisse être calculée avec précision.

Alternativement, la section du couteau selon une coupe dans le plan *x-z* a la forme d'un triangle isocèle d'angle au sommet θ', θ' étant compris entre 1° et 30°. Alternativement ou complémentairement, la section du couteau peut présenter une extrémité de forme carrée, polygonale ou arrondie.

Afin de pouvoir contraindre l'au moins un pivot 10, 10' sur toute sa circonférence, le test requiert la mise en mouvement relatif du posage 2 et du couteau 4 de manière à entraîner l'axe horloger 1 en rotation, tout en appliquant une force F au niveau d'une surface 42 de l'arbre horloger.

Dans le mode de réalisation privilégié, le posage 2 est placé sur une structure motorisée adaptée pour déplacer le posage 2 avec précision dans un plan horizontal *x-y.* Le dispositif de test 3 comprend un premier actionneur permettant de déplacer le posage 2 selon l'axe *x* et un deuxième actionneur permettant de déplacer le posage selon l'axe *y*.

Cette structure motorisée permet à la fois de positionner le posage 2 correctement en regard du couteau 4 pour permettre ultérieurement le contact de l'extrémité 41 du couteau 4 au niveau de la surface 42 de l'arbre horloger 1, mais également le déplacement relatif du posage 2 et du couteau 4, maintenu en position fixe, afin de procéder au test.

Dans la variante avec roulette 4', la structure de support 5 est complétée par un actionneur permettant la mise en rotation de la roulette 4' autour d'un axe parallèle à l'axe A1 de l'arbre. Dans cette variante, la rotation de la roulette 4' remplace la translation du couteau 4 relativement au posage lors du test. Tout ce qui est décrit dans ce document pour un mode de réalisation comprenant un couteau 4 peut être envisagé de manière similaire pour le mode de réalisation comprenant une roulette 4'.

En alternative, lors du test, le posage 2 peut être fixe et le couteau 4 rendu mobile selon l'axe *y*.

Par exemple, le mouvement relatif du posage 2 et du couteau 4 selon l'axe *y* est défini de manière à reproduire les vitesses et accélérations auxquelles l'arbre horloger 1 est censé être soumis dans le mouvement horloger. En conséquence, la vitesse du couteau selon l'axe *y* peut être non constante sur sa course.

La structure de support 5 portant le couteau 4 ou la roulette 4' est motorisée selon l'axe *z* relativement à un bâti 99 du dispositif de test 3, pour permettre le positionnement relatif du couteau 4 ou de la roulette 4' sur l'arbre horloger 1 afin de mettre l'extrémité 41 du couteau 4 ou de la roulette 4' au contact de la surface 42 de l'arbre horloger 1, et pour permettre ensuite l'application de la force sur l'arbre horloger 1 lors du test. Le bâti est un bâti fixe. En d'autres termes, le bâti est destiné à rester en position fixe relativement à un référentiel géocentrique, en utilisation courante, en particulier lors d'un test.

En complément ou en alternative à ce mode de réalisation privilégié, la structure de support 5 peut être motorisée selon les trois axes *x*, *y* et *z*, à l'aide de trois actionneurs, pour permettre un positionnement relatif de l'extrémité 41 du couteau 4 et de l'arbre horloger 1 uniquement par le biais du déplacement de la structure de support 5.

En complément ou en alternative à ce mode de réalisation privilégié, le posage 2 peut être motorisé selon les trois axes *x*, *y* et *z*, à l'aide de trois actionneurs, pour permettre un positionnement relatif de l'extrémité 41 du couteau 4 et de l'arbre horloger 1 uniquement par le biais du déplacement du posage 2.

Dans le mode de réalisation privilégié, la force appliquée par le couteau 4 est pilotée par le déplacement selon l'axe *z* de la structure 5. Le couteau 4 et/ou la structure de support 5 sont optionnellement connectés à un capteur de force pour mesurer la force appliquée sur l'arbre horloger. La force reprise par le couteau 4 correspond à la charge totale appliquée sur l'arbre horloger. Cette force peut être constante ou variable lors du test ; elle est typiquement comprise entre 0 et 10 N.

En alternative, le couteau 4 est fixe selon l'axe z et l'application de la force F intervient par le déplacement du posage 2 selon l'axe *z*.

La force appliquée par le couteau 4 est asservie en cours de mesure avec une boucle de régulation pour maintenir la force désirée dans une tolérance prédéterminée tout au long de l'essai, indépendamment d'éventuelles irrégularités sur la circonférence de la surface 42.

Le posage 2 est déplacé selon les axes *x* et *y* de manière à positionner l'arbre horloger 1 à l'aplomb de l'extrémité 41 du couteau 4, précisément de manière à placer la surface 42 sous l'extrémité 41 du couteau 4. Ce déplacement peut être effectué manuellement ou automatiquement. Un système de loupe ou une caméra permet de contrôler la position relative du couteau 4 et de l'arbre horloger 1.

Dans le mode de réalisation illustré, une fois l'extrémité 41 du couteau 4 mise au contact de l'arbre horloger 1 et la force F appliquée, le posage 2 est déplacé selon l'axe *y* de manière à permettre la mise en rotation de l'arbre horloger 1.

Toute autre combinaison de déplacements permettant le mouvement relatif du couteau 4 et du posage 2 reste bien évidemment possible.

Les déplacements du posage 2 et du couteau 4 ou de la roulette 4' sont pilotés par une unité de gestion et d'enregistrement 9, qui collecte également les données issues des capteurs de force intégrés dans la structure de support 5 du couteau 4 ou de la roulette 4' et les supports 12, 12'.

Les vitesses et accélérations de déplacement sont comprises typiquement respectivement entre 0 à 3 m/s et entre 0 et 85 m.s⁻².

L'unité de gestion et d'enregistrement permet ainsi d'intégrer les données issues de différents capteurs ou instruments qui mesurent, par exemple, les paramètres suivants :
- la position du couteau 4 par rapport à un référentiel donné et/ou par rapport à l'arbre horloger 1 à tester,
- le déplacement du couteau 4 par rapport à l'arbre horloger 1 à tester, selon l'axe *z*,
- le déplacement du posage 2 dans le plan *x-y,* plus particulièrement selon la direction *y*,
- la force reprise par le couteau 4,
- les forces reprises par les supports 12, 12'.

A partir de ces mesures, l'unité de gestion et d'enregistrement peut calculer :
- la vitesse de rotation de l'arbre horloger 1 autour de son axe A1,
- l'accélération de rotation de l'arbre horloger 1 autour de son axe A1,
- l'angle de rotation de l'arbre horloger 1 autour de son axe A1.
-

L'unité de gestion et d'enregistrement 9 permet de définir les paramètres de test et la séquence de test. Les résultats de mesure sont enregistrés, en particulier la force en fonction de la position relative du posage 2 et du couteau 4. Dans le cas d'un test de résistance, l'angle relatif de rupture et la charge de rupture sont enregistrés. L'angle relatif de rupture est l'angle entre l'axe horizontal x et l'axe A1ᵣ de l'extrémité du pivot au moment de la rupture, comme illustré en figure 8.

La mesure de l'angle de rotation de l'arbre horloger 1 autour de son axe A1 permet notamment de s'assurer que l'arbre horloger 1 fait au minimum un tour lors d'une course complète du déplacement du couteau 4 et que, par conséquent, l'arbre horloger 1 est testé sur l'intégralité de sa circonférence. Cette mesure permet, le cas échéant, de déterminer le nombre de tour effectués par l'arbre horloger 1.

Un mode d'exécution d'un procédé de test de l'arbre horloger 1 comprenant l'au moins un premier pivot 10, 10' est décrit ci-après.

Le procédé comprend les étapes suivantes :
a) disposer l'arbre horloger 1 en appui sur les supports 12, 12' au niveau de l'au moins un premier pivot 10 et du second pivot 10', ou au niveau de l'au moins un premier pivot 10 et d'une surface de l'arbre,
b) appliquer une force F sur l'arbre horloger 1 au niveau d'une surface 42 au moyen de l'extrémité 41 du couteau 4, au moins sensiblement perpendiculairement à l'axe A1 de rotation, de sorte que cet effort soit au moins partiellement ou majoritairement ou quasi intégralement ou intégralement repris par le support 12 au niveau de l'au moins un premier pivot 10,
c) entraîner en rotation l'arbre horloger 1 autour de l'axe A1 de rotation par un mouvement relatif du couteau 4 et du support 2, grâce au contact établi entre l'extrémité 41 du couteau et la surface 42 de l'arbre horloger 1.

Avantageusement, le procédé comprend en outre une étape de réalisation de mesures lors des étapes d'application de force et/ou de mise en mouvement de l'arbre horloger 1, ladite étape de réalisation de mesures comprenant :
- la mesure de la force reprise par les supports 12, 12', transmise par les surfaces d'appui des pivots 10, 10' sur les supports 12, 12', et/ou
- la mesure de la position angulaire de l'arbre horloger 1 autour de l'axe x, et/ou
- la mesure de l'intensité de la déformation de l'arbre horloger 1, et/ou
- la mesure de la position et/ou de l'amplitude de déplacement du couteau 4.

Dans le cas particulier d'un test d'épreuve, le procédé peut ne pas comprendre d'étape de mesure mais uniquement un paramétrage de la force F appliquée lors du test.

De préférence, la force F appliquée est pilotée et contrôlée en fonction de valeurs de consigne, les valeurs de consigne étant constantes et/ou définies par une fonction, notamment une fonction consistant à augmenter la force progressivement et/ou par paliers et/ou à déterminer la valeur de consigne en fonction du déplacement du couteau 4.

Entre les étapes a) et b) évoquées plus haut, le couteau 4 est mis en contact avec l'arbre horloger 1 à tester de sorte à ce que l'extrémité 41 du couteau 4 soit en contact avec une surface 42 définie de l'arbre horloger 1 et que le couteau 4 puisse ensuite appliquer une force perpendiculaire à l'axe A1 de rotation de l'arbre horloger 1 sur une portion précise de l'arbre horloger, par exemple sur un tigeron. La position initiale selon l'axe *y* du couteau 4 est réglée en tenant compte du diamètre de l'arbre horloger 1 à tester et de la longueur de l'extrémité 41 du couteau 4. Au moyen d'un déplacement de la structure de support 5 selon l'axe *z*, le couteau 4 est mis au contact de l'arbre horloger 1 avec une force initiale F₀ verticale et perpendiculaire à l'axe A1 de rotation de l'arbre, mesurée par un capteur de force, notamment un capteur de force placé sur la structure de support 5. L'approche peut se faire à vue dans un premier temps, avec l'aide d'un dispositif optique tel qu'une loupe ou tout autre dispositif approprié tel qu'une caméra 8, afin d'assurer le positionnement du couteau relativement à la surface 42, puis de manière régulée par l'unité de gestion et d'enregistrement 9 afin de permettre une mise en charge graduelle et précise jusqu'à une force F prédéterminée. Le couteau 4 est également relié à un capteur de position afin de contrôler sa position dans l'espace.

De préférence, les étapes b) et c) évoquées plus haut sont réalisées simultanément. De préférence, l'extrémité 41 du couteau 4 est en appui sur la surface 42 de l'arbre horloger et le posage 2 est translaté tangentiellement à ladite surface selon l'axe *y*, ce qui permet la mise en rotation de l'arbre horloger 1 par roulement du fait d'un frottement. Avantageusement, le roulement est sans glissement. La vitesse de rotation de l'arbre horloger 1 est proportionnelle à la vitesse de déplacement relative du posage 2 par rapport au couteau 4 selon l'axe *y*.

Le contrôle de la vitesse de rotation de l'arbre horloger 1 et de l'accélération de translation du couteau permet de surveiller la mise en rotation de l'arbre horloger et/ou la rotation de l'arbre horloger.

Alternativement, le posage 2 est fixe et le couteau 4 translate selon l'axe *y* de manière à induire la rotation de l'arbre horloger 1.

En variante, le posage 2 et la structure de support 5 sont fixes et la roulette 4' tourne de manière à induire la rotation de l'arbre horloger 1.

Le posage 2 et/ou le couteau 4 peuvent être translatés relativement dans les deux sens selon l'axe *y*, de manière à ce que l'arbre horloger pivote autour de son axe A1 dans le sens horaire ou dans le sens antihoraire. En fonction de la course relative effectuée par le posage 2 et/ou le couteau 4, l'arbre horloger 1 pivote sur lui-même pour une portion de tour, un tour ou plus. De préférence, l'arbre horloger 1 pivote d'au moins un tour complet pour que toute la circonférence du pivot soit testée. Par exemple, l'arbre horloger pivote d'au moins deux tours complets ou plus, le premier tour dans le sens horaire et le second tour dans le sens antihoraire, ou vice versa.

La force nécessaire pour entraîner l'arbre horloger en rotation dépend notamment
- du rapport entre le diamètre du pivot 10 testé et le diamètre de la surface 42 de l'arbre horloger à l'endroit où est positionné le couteau 4; et
- de la nature des surfaces en contact (coefficients de frottement et/ou de résistance au roulement) au niveau de l'extrémité 41 du couteau 4 et de l'arbre horloger 1 ; et
- de la nature des surfaces en contact (coefficients de frottement et/ou de résistance au roulement) au niveau des supports 12, 12' et des pivots 10, 10' de l'arbre horloger.

Le coefficient de frottement entre le couteau 4 et l'arbre horloger 1 est de préférence supérieur à 0.3.

Plus précisément, le test peut se dérouler selon les étapes suivantes, les consignes d'effort étant adaptées à l'objectif du test :
E1. Sélectionner, en fonction des dimensions de l'arbre horloger à tester, les éléments des unités U et U' (supports 12, 12' ; butées 13, 13') ;
E2. Positionner les unités U, U' préalablement assemblées sur le posage 2 ;
E3. Positionner l'arbre horloger 1 sur les supports 12, 12', de manière à ce que sa rotation soit libre ;
E4. Positionner l'extrémité 41 du couteau 4 au contact de la surface 42 de l'arbre horloger 1 à tester, à une distance prédéterminée du point d'appui du pivot 10 sur le support 12 ;
E5. Démarrer le test en appliquant les consignes de contrainte et de déplacement, par exemple :
   - la force F appliquée par le couteau 4 sur l'arbre horloger 1, qui correspond à la position du couteau 4, en particulier sa position selon l'axe *z* ;
   - la course de déplacement du posage 2 ou du couteau 4, qui détermine le nombre de tours de mesure,
   - la vitesse de déplacement du posage 2 ou du couteau 4, qui détermine la vitesse de rotation de l'arbre horloger.
E6. Simultanément à l'étape E5, mesurer et enregistrer les différents paramètres, par exemple :
   - l'évolution de la force appliquée par le couteau 4 en fonction du déplacement du couteau 4 et/ou de l'angle de rotation de l'arbre horloger 1 et/ou du temps,
   - la position angulaire de l'arbre horloger 1,
   - la force mesurée au niveau des supports 12, 12' ou au niveau du couteau 4,
   - la force appliquée au moment de la rupture de l'arbre horloger.

La force appliquée peut être unique sur toute la durée du test, ou être augmentée graduellement ou par palier à chaque aller-retour du couteau ou être paramétrée selon un protocole défini.

De préférence, lors de l'étape E6, on mesure et on enregistre la force appliquée sur l'au moins un pivot 10 ou sur les deux pivots 10, 10' par le biais de capteurs positionnés dans les unités U, U' du posage 2 et/ou sur le couteau 4. On enregistre ainsi l'évolution de chacune des forces en fonction du déplacement relatif du posage 2 et du couteau 4 et/ou de la rotation de l'arbre horloger 1.

Chaque pivot 10, 10' peut être testé individuellement en déplaçant le couteau 4 dans la direction *x* pour le positionner le long de l'axe A1 de rotation de l'arbre horloger 1 au plus proche du pivot 10, 10' à tester, de manière à solliciter majoritairement l'appui au niveau de ce pivot 10 ou 10'.

La mise en place de l'arbre horloger 1 sur le posage 2 et l'approche du couteau 4 sont facilitées par l'utilisation d'un moyen de visualisation 8, par exemple un microscope stéréoscopique d'inspection avec ou sans oculaire, une caméra CCD, ou tout autre dispositif approprié.

Le moyen de visualisation 8 est adapté pour contrôler le positionnement de l'arbre horloger 1 sur le posage et/ou le déroulement de la mesure.

Optionnellement, un éclairage E peut venir compléter le moyen de visualisation 8. L'éclairage E est séparé ou intégré au dispositif de contrôle visuel.

Le test décrit ci-dessus peut avoir deux objectifs : il permet de déterminer, pour des échantillons issus d'essais, la limite maximale de résistance d'un lot d'arbres horlogers lors de leur rupture, c'est-à-dire qu'il peut servir de test de résistance. Il peut également servir de test d'épreuve pour éliminer les arbres horlogers comportant des défauts pouvant conduire à une rupture prématurée en regard des forces théoriques qu'ils devraient supporter, ou de test de fatigue pour éprouver le comportement d'un arbre horloger dans le temps.

Pour les tests de résistance, la force appliquée sur l'arbre horloger 1 est augmentée jusqu'à rupture.

Pour les tests d'épreuve, la force appliquée sur l'arbre horloger 1 est prédéterminée pour rester en deçà de la valeur maximale théoriquement admissible par le matériau, tout en étant supérieure ou égale à la force correspondant aux sollicitations usuelles en fonctionnement. L'arbre horloger 1 ne doit pas être cassé à l'issue du test.

Pour les tests de fatigue, une force prédéterminée est appliquée sur l'arbre horloger 1 pendant une longue durée déterminée.

Un mode d'exécution d'un procédé de fabrication et/ou de contrôle d'un arbre horloger 1 ou d'un mouvement horloger ou d'une pièce d'horlogerie est décrit ci-après.

Le procédé comprend une phase de mise en œuvre d'un procédé de test décrit précédemment.

Par la mise en œuvre de ce procédé, on obtient un arbre horloger 1 testé ou contrôlé ou un mouvement horloger ou une pièce d'horlogerie.

Dans ce document, on a décrit un dispositif et un procédé de test d'un arbre de mouvement horloger. Toutefois, il est applicable à tout arbre horloger quelle que soit sa nature ou sa fonction, de même qu'à toute pièce de révolution telle qu'une goupille, un pignon, une tige, un tube, ou une barrette de bracelet.

Dans ce document, on a décrit un dispositif et un procédé de test d'un arbre horloger à deux pivots. Toutefois, il est applicable à tout arbre horloger, notamment un arbre horloger présentant un seul pivot.

Les dispositifs et procédé de test décrits dans ce document sont particulièrement adaptés pour tester des arbres horlogers en matériaux ductiles, notamment des arbres horlogers en acier ou en alliage haute performance ou en alliage à haute entropie. Toutefois, ils peuvent aussi être utilisés pour tester des arbres horlogers réalisés en d'autres matériaux, comme des arbres horlogers en alliage amorphe, en verre, en rubis, en céramique, en composite à matrice métallique ou à matrice céramique, ou encore en matériau comprenant des fibres de carbone.

De préférence, dans le procédé de test, on applique une force sur l'arbre horloger alors que l'arbre horloger est en rotation. Ceci permet de solliciter l'arbre horloger dans toutes ses positions angulaires autour de son axe A1. Toutefois, alternativement, avec le dispositif de test décrit et le procédé de test décrit, il est possible de réaliser un test dans lequel on sollicite un arbre horloger seulement dans un nombre fini et déterminé de positions autour de son axe. Pour ce faire, on alterne les étapes b) et c) décrites plus haut avec une force de test F et, lors des étapes d'entraînement c), on applique une force minimale Fm juste nécessaire à l'entraînement de l'arbre horloger en rotation. L'arbre horloger est alors sollicité mécaniquement de manière statique, l'arbre horloger n'étant pas en rotation lorsque la force de test F est appliquée.

De préférence, grâce aux solutions de l'invention, on obtient un moyen de caractérisation d'un composant horloger de révolution de type arbre horloger, par le biais de la combinaison :
- d'une sollicitation mécanique, et
- d'un entraînement en rotation de l'arbre horloger,
réalisée de manière simple par un phénomène de roulement d'une surface 42 de l'arbre horloger 1 sous une arête d'un couteau 4. Pour ce faire, le couteau 4 est mis en mouvement relativement à l'arbre horloger 1 selon une direction tangentielle à l'arbre horloger 1 par le biais notamment du déplacement du posage 2 sur lequel est positionné l'arbre horloger 1.

Grâce au procédé et dispositif de test selon l'invention, on peut tester un arbre horloger sur toute la circonférence d'une de ses sections transversales. Ceci rend ces solutions particulièrement indiquées pour tester les arbres horlogers en matériaux sensibles aux défauts localisés pour éviter que le test ne soit réalisé à un endroit favorable autour de l'arbre et assurer que tout défaut, indépendamment de sa localisation sur la circonférence de l'arbre concernée par le test, puisse ainsi être sollicité et détecté. Les solutions sont donc utilisables pour les arbres horlogers quel que soit leur matériau constitutif.

## Revendications

1. Dispositif de test (3) d'un arbre horloger (1) comprenant au moins un premier pivot (10, 10') et un axe (A1) de rotation, le dispositif comprenant :
- un posage (2) comprenant deux supports (12, 12') destinés à recevoir l'arbre horloger (1), dont au moins l'un des deux supports (12) est destiné à recevoir l'au moins un premier pivot (10),
- un élément (4 ; 4') d'application d'un effort mécanique sur l'arbre horloger, positionné de sorte que cet effort soit au moins partiellement repris par le support (12) au niveau de l'au moins un premier pivot (10),
**caractérisé en ce que** l'élément (4 ; 4') d'application d'un effort mécanique est agencé de sorte que l'arbre horloger (1) est entraîné en rotation par un mouvement relatif de l'élément (4 ; 4') d'application d'un effort mécanique et du posage (2).

2. Dispositif de test (3) selon la revendication précédente, **caractérisé en ce que** le mouvement relatif de l'élément (4 ; 4') d'application d'un effort mécanique par rapport au posage (2) est un déplacement selon une direction perpendiculaire ou sensiblement perpendiculaire à l'axe (A1) de l'arbre horloger (1) et/ou **en ce que** l'effort mécanique sur l'arbre horloger est au moins sensiblement perpendiculaire à l'axe (A1) de rotation.

3. Dispositif de test (3) selon l'une des revendications précédentes, **caractérisé en ce que** le dispositif comprend :
- un bâti fixe (99), et
- un premier actionneur (43 ; 43') d'entraînement de l'élément (4 ; 4') d'application de l'effort mécanique relativement au bâti fixe (99) et/ou un deuxième actionneur (7) d'entraînement du posage (2) relativement au bâti fixe (99).

4. Dispositif de test (3) selon l'une des revendications précédentes, **caractérisé en ce que** le dispositif est agencé de sorte qu'une course du mouvement relatif de l'élément (4 ; 4') d'application d'un effort mécanique par rapport au posage (2) induit une rotation d'au moins un tour ou d'au moins un tour et demi de l'arbre horloger (1) autour de son axe (A1) de rotation.

5. Dispositif de test (3) selon l'une des revendications précédentes, **caractérisé en ce qu'**au moins un support comprend une encoche (122, 122') de réception de l'au moins un premier pivot (10, 10').

6. Dispositif de test (3) selon l'une des revendications précédentes, **caractérisé en ce qu'**au moins un support comprend un élément de type demi-pierre de palier ou pierre de palier pour pivoter l'au moins un premier pivot (10, 10') relativement à l'au moins un support.

7. Dispositif de test (3) selon l'une des revendications précédentes, **caractérisé en ce qu'**il comprend au moins une butée axiale (13, 13') destinée à limiter le déplacement de l'arbre horloger (1) selon l'axe (A1) de rotation.

8. Dispositif de test (3) selon l'une des revendications précédentes, **caractérisé en ce que** l'élément (4 ; 4') d'application d'un effort mécanique comprend une extrémité (41) ayant une forme d'arête et destinée à venir en contact avec l'arbre horloger (1).

9. Dispositif de test (3) selon la revendication précédente, **caractérisé en ce que** l'extrémité (41) est réalisée :
- en polymère renforcé ou non renforcé, ou
- en composite, ou
- en caoutchouc, ou
- en élastomère, ou
- en polypropylène (PP), ou
- en polycarbonate (PC), ou
- en polyméthacrylate de méthyle (PMMA), ou
- en résine photo polymérisable, ou
- en nylon.

10. Dispositif de test (3) selon la revendication 8 ou 9, **caractérisé en ce que** l'arête est formée par deux plans formant un angle compris entre entre 1° et 30°, de préférence 10°, et/ou **en ce que** l'arête présente une longueur comprise entre 0.9 mm et 150 mm.

11. Procédé de test d'un arbre horloger (1) comprenant au moins un premier pivot (10, 10') et un axe (A1) de rotation, le procédé comprenant les étapes suivantes :
- disposer l'arbre horloger en appui sur un posage (2) comprenant deux supports (12, 12') destinés à recevoir l'arbre horloger (1), dont au moins l'un des deux supports (12) est destiné à recevoir l'au moins un premier pivot (10),
- appliquer un effort mécanique (F) sur l'arbre horloger (1) de sorte que cet effort soit au moins partiellement repris par le support (12, 12') au niveau de l'au moins un premier pivot (10, 10'), l'effort mécanique (F) étant appliqué à l'aide d'un élément (4 ; 4') d'application d'un effort mécanique sur l'arbre horloger (1),
- mettre l'élément (4 ; 4') d'application d'un effort mécanique en mouvement relativement au posage (2) de sorte à entraîner en rotation l'arbre horloger (1) autour de l'axe (A1) de rotation par un mouvement relatif de l'élément (4 ; 4') d'application d'un effort mécanique et du posage (2), notamment par un mouvement de translation de l'élément (4 ; 4') d'application de l'effort mécanique sur la surface (42) de l'arbre horloger (1).

12. Procédé de test selon la revendication précédente, **caractérisé en ce qu'**on mesure :
- l'effort mécanique appliqué sur l'arbre horloger (1), et/ou
- le mouvement de l'arbre horloger (1),
pendant l'étape d'application d'un effort mécanique et/ou pendant l'étape de mise en mouvement.

13. Procédé de test selon la revendication 11 ou 12, **caractérisé en ce qu'**on applique l'effort mécanique (F) sur l'arbre horloger (1) selon une consigne d'effort prédéfinie.

14. Procédé de test selon l'une des revendications 11 à 13, **caractérisé en ce qu'**on applique l'effort mécanique (F) sur l'arbre horloger (1) de sorte que cet effort soit au moins sensiblement perpendiculairement à l'axe (A1) de rotation.

15. Procédé de fabrication et/ou de contrôle d'un arbre horloger (1) comprenant la mise en œuvre d'un procédé de test selon l'une des revendications 11 à 14.
